# EUROPÄISCHE PATENTSCHRIFT

(11) **EP 1 746 295 B1**
(45) Veröffentlichungstag und Bekanntmachung des Hinweises auf die Patenterteilung: **05.10.2011**
(21) Anmeldenummer: 06013555.5
(22) Anmeldetag: 30.06.2006
(51) Int. Cl.: F16C 1/26

(54) **Betätigungszug**
Actuating cable
Câble de commande

(30) Priorität: 18.07.2005 DE 20511451 U
(43) Veröffentlichungstag der Anmeldung: 24.01.2007
(73) Patentinhaber: Dura Automotive Systems GmbH, 40549 Düsseldorf (DE)
(72) Erfinder: Clemens, Markus, 40885 Ratingen (DE)
(74) Vertreter: Paul, Dieter-Alfred

(56) Entgegenhaltungen:
- DE-B1- 1 575 661
- DE-B1- 1 775 897
- US-A- 4 378 712
- US-A1- 2004 224 779

## Beschreibung

Die vorliegende Erfindung betrifft einen Betätigungszug mit einem Betätigungsmantel, einer Betätigungsseele, die den Betätigungsmantel durchgreift und darin axial beweglich geführt ist, und wenigstens einer Anschlußeinrichtung, die ein stangenförmiges Anschlußelement aufweist, wobei eines der aus dem Betätigungsmantel herausragenden Enden der Betätigungsseele mit dem freien Ende des Anschlußelements, das in einem mit dem Betätigungsmantel verbundenen rohrförmigen Führungselement axial verschiebbar geführt ist, verbunden ist.

Mechanische Betätigungszüge dieser Art sind in vielfältigen Ausführungsformen bekannt und werden insbesondere im Bereich der Fahrzeugtechnik eingesetzt, um Schalthebel mit einem Getriebe zu verbinden. In ihrem grundsätzlichen Aufbau bestehen sie aus einem schlauchförmigen, biegsamen Betätigungsmantel, in dem eine meist als Drahtlitze oder -seil ausgebildete Betätigungsseele axial beweglich geführt ist. Die Betätigungsseele ragt an beiden Enden aus dem Betätigungsmantel heraus und ist dort mit Anschlußeinrichtungen verbunden, um sie einerends mit dem Betätigungsorgan und anderenends mit dem zu betätigenden Organ zu verbinden. Die Anschlußeinrichtungen der bekannten Betätigungszüge besitzen in der Regel einen Anschlußkopf, der so ausgebildet ist, daß er mit einem komplementären Anschlußteil an dem zu betätigenden Organ gekuppelt werden kann. In den meisten Fällen ist das Anschlußteil als Kugelkopf ausgebildet, der in eine entsprechende Kugelpfanne des Anschlußkopfes einrastbar ist. Des weiteren besitzt die Anschlußeinrichtung ein stangenförmiges Anschlußelement, die an ihrem einen Ende mit dem Anschlußkopf verbunden ist und an ihrem freien Ende eine Sackbohrung aufweist, über die eine Verbindung mit der Betätigungsseele hergestellt werden kann. Dabei greift das mit dem Sackloch versehene freie Ende in ein rohrförmiges Führungselement - auch Pendelrohr genannt - ein, in dem es axial verschiebbar geführt ist. Das Führungselement wiederum sitzt an einem Gehäuse, das an dem Betätigungsmantel angebracht ist.

Ein Problem, das insbesondere bei Fahrzeugen immer wieder auftritt, besteht darin, daß Geräusche und Vibrationen, die an einem zu betätigenden Organ wie beispielsweise einem Fahrzeuggetriebe auftreten, an das Betätigungsorgan, d. h. den Schalthebel, übertragen werden. Um eine solche Übertragung von Geräuschen und Vibrationen zu vermeiden, sind bereits unterschiedliche Maßnahmen getroffen worden. So ist bekannt, in einem Anschlußkopf zwischen einem Anschlußkäfig und einem Aufnahmeorgan einen Stützring aus einem gummielastischen Material vorzusehen. Bei der Anschlußeinrichtung gemäß der DE 197 55 284 A1 weisen entweder der Anschlußkäfig oder das Aufnahmeorgan eine Profilierung in Form von über den Umfang verteilten Zähnen auf, die an dem Stützring anliegen. Hierdurch sollen über den Umfang gleichmäßig verteilte Hohlräume geschaffen werden, in die das unter Druckspannung ausweichende Gummimaterial hineinverlegt werden soll. Eine solche Art von Verdrängung setzt jedoch einen erheblichen Widerstand entgegen.

Ein Betätigungszug nach dem Oberbegriff des Anspuchs 1 ist aus DE 1 575 661 B1 bekannt. Hier wird ein elastisches Rohr als Reibungselement eingesetzt. Das Rohr ist in einer Öffnung eines Anschlussstückes vorgesehen und seibt gegen eine Stange.

Aufgabe der Erfindung ist es daher, einen Betätigungszug der eingangs genannten Art so auszubilden, daß sie besonders geeignet ist, dan dem zu betätigenden Organ auftretende Vibrationen aufzufangen, so daß sie an dem Betätigungsorgan nicht mehr wahrgenommen wreden können.

Diese Aufgabe ist erfindungsgemäß dadurch gelöst, daß an einem axialen Teilabschnitt der Innenwandung des rohrförmigen Führungselements und/oder der Außenseite des damit in Eingriff kommenden stangenförmigen Anschlußelements eine Reibschicht zur Erhöhung des Reibungswiderstands zwischen dem Anschlußelement und dem Führungselement vorgesehen ist.

Der Erfindung liegt damit die Überlegung zugrunde, die miteinander in Kontakt kommenden Flächen des Führungselements und des Anschlußelements partiell mit einer Reibschicht zu versehen, so daß einer Bewegung des stangenförmigen Anschlußelements bei beispielsweise einem Schaltvorgang auf einem Teil des verstellweges ein höherer Widerstand als bei einem direkten Kontakt zwischen dem Anschlußelement und dem Führungselement entgegengesetzt wird. Dabei wird dem Umstand Rechnung getragen, daß das stangenförmige Anschlußelement in seiner ausgefahrenen Ausgangsstellung nur in einem kleinen axialen Teilabschnitt mit dem Führungselement in Eingriff steht, in seiner voll eingeschobenen Stellung jedoch über einen Großteil seiner Länge, so daß durch eine entsprechende Positionierung der Reibschicht eine erhöhte Reibung tatsächlich nur in einem gewünschten Bereich der axialen Relativbewegung zwischen dem Anschlußelement und dem Führungselement stattfindet.

Wenn beispielsweise die Reibschicht an dem in das Führungselement hineinragenden freien Endbereich des Anschlußelements oder alternativ an dem vom Betätigungsmantel wegweisenden Endbereich des Führungselements vorgesehen ist, führt dies dazu, daß ständig ein Kontakt zwischen dem Führungselement und dem Anschlußelement im Bereich der Reibschicht stattfindet und entsprechend der erhöhte Reibungswiderstand über den gesamten Verstellweg des Anschlußelements gegeben ist.

Ist in umgekehrter Weise die Reibschicht an dem zum Betätigungsmantel weisenden Endbereich des Führungselements vorgesehen, kommt sie mit dem Anschlußelement erst in Kontakt, wenn das Anschlußelement aus einer ausgeschobenen Ausgangslage über eine vorgegebene Distanz in das Führungselement eingeschoben ist, so daß nur auf dem letzten Teilabschnitt des Verstellwegs eine Erhöhung des Reibungswiderstandes stattfindet. Eine solche Ausgestaltung kann beispielsweise wünschenswert sein, wenn der letzte Teilabschnitt einem eingelegten Gang entspricht. Dann ist der Schaltvorgang zwar leichtgängig, jedoch wird einer Bewegung des Anschlußelements bei eingelegtem Gang eine höhere Reibkraft entgegengesetzt, welche auch der Übertragung von Vibrationen entgegenwirkt. Im Ergebnis wird durch die erhöhte Reibung eine Vibrationsentkopplung erzielt. Dabei ist die auftretende Reibkraft durch geeignete Auswahl der Materialpaarungen und Toleranzen in gewünschter Weise festlegbar. Die gleiche Wirkung wird erzielt, wenn die Reibschicht an einem axialen Teilabschnitt des Betätigungselements vorzusehen, der erst dann mit dem Führungselement in Eingriff kommt, wenn das Anschlußelement aus einer ausgeschobenen Ausgangslage über eine vorgegebene Distanz in das Führungselement eingeschoben wird.

Gemäß einer bevorzugten Ausführungsform ist die Reibschicht an einer in das Führungselement eingesetzten Buchse ausgebildet. Solche Buchsen können dann in ähnlicher Weise wie ein Gleitlager ausgebildet und in das Führungselement eingesetzt sein.

Hinsichtlich vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine erste Ausführungsform eines Betätigungszugs gemäß der vorliegenden Erfindung in Vorderansicht mit einer vergrößerten, geschnittenen Teilansicht durch einen Endbereich des Führungselements und
- Figur 2: in Vorderansicht eine alternative Ausführungsform eines Betätigungszugs gemäß der vorliegenden Erfindung mit einer vergrößerten, geschnittenen Teilansicht.

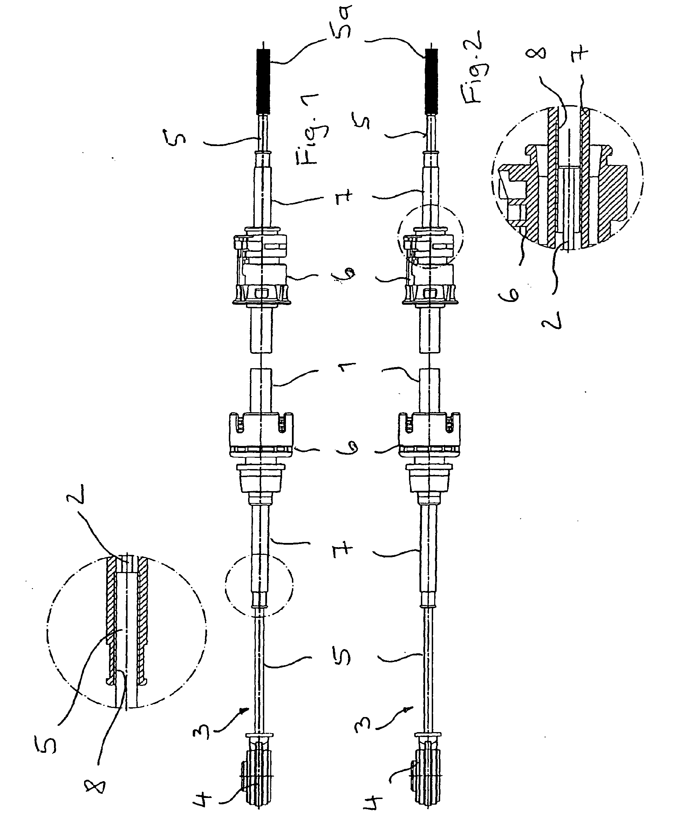

In den Figuren 1 und 2 sind Ausführungsformen eines erfindungsgemäßen Betätigungszugs dargestellt, der insbesondere in Fahrzeugen als Schalt- oder Wählzug eingesetzt werden kann. Der Betätigungszug besteht in an sich bekannter Weise aus einem schlauchartigen Betätigungsmantel 1 und einer Betätigungsseele 2, welche den Betätigungsmantel 1 durchgreift und darin axial beweglich geführt ist. Die aus dem Betätigungsmantel 1 herausragenden Enden der Betätigungsseele 2 sind jeweils mit Anschlußeinrichtungen 3, 4 zur Verbindung mit einem Betätigungsorgan oder einem zu betätigenden Organ verbunden. Die Anschlußeinrichtungen 3 besitzen jeweils einen Anschlußkopf 4 (nur links gezeigt) und eine mit diesem formschlüssig verbundene Anschlußstange 5, die an ihrem anschlußkopfseitigen Ende mit einem entsprechenden Gewinde 5a oder dergleichen versehen ist. Die Anschlußstange 5 ist an ihrem freien Ende mit einer endseitig offenen Sackbohrung versehen, in welcher das aus dem Betätigungsmantel 1 herausragende Ende der Betätigungsseele 2 positioniert und fixiert ist. Die mit der Betätigungsseele 2 verbundenen Endbereiche der Anschlußstangen 5 sind in einem rohrförmigen Führungselement 7 verschieblich geführt, welches an einem mit dem Betätigungsmantel 1 verpreßten Gehäuse 6 gehalten ist.

Wie die geschnittenen, vergrößerten Teilansichten der Figuren 1 und 2 zeigen, ist in die rohrförmigen Führungselemente 7 jeweils eine Buchse 8 eingepreßt. Diese Buchse 8 besteht aus einem Material, welches dem Metallmaterial der Anschlußstange 5 einen höheren Reibungswiderstand entgegensetzt als das Material des Führungselements 7.

Bei der in Figur 1 dargestellten Ausführungsform ist die Buchse 8 an dem zum Anschlußkopf 4 weisenden Endbereich des Führungselements 7 vorgesehen mit der Folge, daß die Anschlußstange 5 über ihren gesamten Verstellweg mit der Buchse 8 in Kontakt steht und somit über den gesamten Verstellweg hinweg der Bewegung der Anschlußstange 5 ein erhöhter Reibungswiderstand entgegengesetzt wird. Alternativ oder zusätzlich zu dieser Ausführungsform ist es möglich, eine entsprechende Reibschicht an dem mit dem Führungselement 7 in Eingriff stehenden Endbereich der Anschlußstange 5 vorzusehen.

Bei der in Figur 2 dargestellten Ausführungsform ist die Buchse 8 an dem von dem Anschlußkopf 4 wegweisenden Endbereich des Führungselements 7 ausgebildet. Dies hat zur Folge, daß ein Kontakt zwischen der Anschlußstange 5 und der Buchse 8 erst hergestellt wird, wenn die Anschlußstange 5 aus ihrer ausgefahrenen Ausgangslage, wie sie jeweils in den linken Hälften der Figuren gezeigt ist, in die eingeschobene Stellung, wie sie jeweils rechtsseitig in den Figuren gezeigt ist, eingeschoben ist. Dabei wird der Bewegung der Anschlußstange 5 in dem ersten Teilabschnitt der Bewegung, in dem ein Kontakt mit dem Führungselement 7 stattfindet, eine geringe Reibung entgegengesetzt, die sich erhöht, wenn die Anschlußstange 5 mit der Buchse 8 in Kontakt kommt. Damit findet eine erhöhte Reibung nur in dem der eingeschobenen Stellung entsprechenden Endbereich des Verstellweges der Anschlußstange 5 statt.

Wenn die eingeschobene Stellung beispielsweise einem eingelegten Gang entspricht, führt dies dazu, daß die erhöhte Reibkraft, welche durch eine geeignete Auswahl der Materialpaarungen und Toleranzen zwischen Anschlußstange 5 und Buchse 8 definiert ist, dazu, daß sich die Anschlußstange in dem Führungselement 7 nicht oder wenig bewegen kann und entsprechend auch einer Übertragung von Vibrationen von der Anschlußstange 5 an die Betätigungsseele 2 und umgekehrt entgegengewirkt wird. Im Ergebnis wird eine Vibrationsentkopplung zwischen dem zu betätigenden Organ - beispielsweise einem Fahrzeuggetriebe - und dem Betätigungsorgan - hier dem Schalthebel eines Fahrzeugs - erzielt.

## Patentansprüche

1. Betätigungszug mit einem Betätigungsmantel (1), einer Betätigungsseele (2), die den Betätigungsmantel (1) durchgreift und darin axial beweglich geführt ist, und wenigstens einer Anschlußeinrichtung (3), die ein stangenförmiges Anschlußelements (5) aufweist, wobei eines der aus dem Betätigungsmantel (8) herausragenden Enden der Betätigungsseele (2) mit dem freien Ende des Anschlußelements (5), das in einem mit dem Betätigungsmantel (1) verbundenen rohrförmigen Führungselement (7) axial verschiebbar geführt ist, verbunden ist, **dadurch gekennzeichnet, daß** an einem axialen Teilabschnitt der Innenwandung des rohrförmigen Führungselements (7) und/oder der Außenseite des damit ein Eingriff kommenden stangenförmigen Anschlußelements (5) eine Reibschicht zur Erhöhung des Reibungswiderstands zwischen dem Anschlußelement (5) und dem Führungselement (7) vorgesehen ist.

2. Betätigungszug nach Anspruch 1, **dadurch gekennzeichnet, daß** die Reibschicht an einer in das Führungselement (7) eingesetzten Buchse (8) ausgebildet ist.

3. Betätigungszug nach Anspruch 1 oder 2, **dadurch gekennzeichnet, daß** die Reibschicht (8) an dem vom Betätigungsmantel (1) wegweisenden Endbereich des Führungselements (7) vorgesehen ist.

4. Betätigungszug nach Anspruch 1 oder 2, **dadurch gekennzeichnet, daß** die Reibschicht (8) an dem zum Betätigungsmantel (1) weisenden Endbereich des Führungselements (7) vorgesehen ist, der erst dann mit dem Anschlußelement (5) in Kontakt kommt, wenn das Anschlußelement (5) aus einer ausgeschobenen Ausgangslage über eine vorgegebene Distanz in das Führungselement (7) eingeschoben wird.

5. Betätigungszug nach Anspruch 1 oder 2, **dadurch gekennzeichnet, daß** die Reibschicht an dem in das Führungselement (7) hineinragenden freien Endbereich des Anschlußelements (5) vorgesehen ist.

6. Betätigungszug nach Anspruch 1 oder 2, **dadurch gekennzeichnet, daß** die Reibschicht an einem axialen Teilabschnitt des Betätigungselements (5) vorgesehen ist, der erst dann mit dem Führungselement (7) in Eingriff kommt, wenn das Anschlußelement (5) aus einer ausgeschobenen Ausgangslage über eine vorgegebene Distanz in das Führungselement (7) eingeschoben wird.

## Claims

1. An actuating cable comprising an actuating jacket (1), an actuating core (2) which passes through the actuating jacket (1) and is guided within the latter with axial movement, and at least one connecting device (3) which has a rod-shaped connecting element (5), one of the ends of the actuating core (2) projecting from the actuating jacket (8) being connected to the free end of the connecting element (5) which is guided with axial displacement in a tubular guide element (7) connected to the actuating jacket (1), **characterised in that** there is provided on an axial partial section of the inner wall of the tubular guide element (7) and/or the outside of the rod-shaped connecting element (5) engaging with the latter a friction layer for increasing the friction resistance between the connecting element (5) and the guide element (7).

2. The actuating cable according to Claim 1, **characterised in that** the friction layer is formed on a bush (8) inserted into the guide element (7).

3. The actuating cable according to Claim 1 or 2, **characterised in that** the friction layer (8) is provided on the end region of the guide element (7) facing away from the actuating jacket (1).

4. The actuating cable according to Claim 1 or 2, **characterised in that** the friction layer (8) is provided on the end region of the guide element (7) facing towards the actuating jacket (1) which only comes into contact with the connecting element (5) when the connecting element (5) is pushed into the guide element (7) from a pushed out initial position over a pre-specified distance.

5. The actuating cable according to Claim 1 or 2, **characterised in that** the friction layer is provided on the free end region of the connecting element (5) projecting into the guide element (7).

6. The actuating cable according to Claim 1 or 2, **characterised in that** the friction layer is provided on an axial partial section of the actuating element (5) which only engages with the guide element (7) when the connecting element (5) is pushed into the guide element (7) from a pushed out initial position over a pre-specified distance.

## Revendications

1. Câble d' actionnement avec une gaine d'actionnement (1), une âme d'actionnement (2) qui passe au travers de la gaine d'actionnement (1) et est conduite à l'intérieur axialement et de manière amovible et au moins un dispositif de liaison (3) qui présente un élément de liaison (5) en forme de barre, sachant que l'une des extrémités de l'âme d'actionnement (2) sortant de la gaine d'actionnement (8) est reliée à l'extrémité libre de l'élément de liaison (5) qui est conduit axialement de manière mobile dans un élément de guidage (7) en forme de tube relié à la gaine d'actionnement (1), **caractérisé en ce que** sur une section axiale de la paroi intérieure de l'élément de guidage (7) en forme de tube et/ou le côté extérieur de l'élément de liaison (5) en forme de barre venant en prise, une couche de frottement est prévue pour augmenter la résistance de frottement entre l'élément de liaison (5) est l'élément de guidage (7).

2. Câble d'actionnement selon revendication 1, **caractérisé en ce que** la couche de frottement est formée sur une douille (8) logée dans l'élément de guidage (7).

3. Câble d'actionnement selon revendication 1 ou 2, **caractérisé en ce que** la couche de frottement (8) est prévue sur l'extrémité de l'élément de guidage (7) indiquant la direction opposée de la gaine d'actionnement (1).

4. Câble d'actionnement selon revendication 1 ou 2, **caractérisé en ce que** la couche de frottement (8) est prévue sur l'extrémité de l'élément de guidage (7) indiquant en direction de la gaine d'actionnement (1), qui ne vient en contact avec l'élément de liaison (5) que lorsque l'élément de liaison (5) est introduit à partir d'une position de sortie extraite vers l'extérieur sur une distance donnée, dans l'élément de guidage (7).

5. Câble d'actionnement selon revendication 1 ou 2, **caractérisé en ce que** la couche de frottement est prévue sur l'extrémité libre de l'élément de liaison (5) avançant dans l'élément de guidage (7).

6. Câble d'actionnement selon revendication 1 ou 2, **caractérisé en ce que** la couche de frottement est prévue sur une section axiale de l'élément d'actionnement (5), qui ne vient en prise avec l'élément de guidage (7) que lorsque l'élément de liaison (5) est introduit à partir d'une position de sortie extraite vers l'extérieur sur une distance donnée dans l'élément de guidage (7).
